# EUROPEAN PATENT APPLICATION

(11) **EP 1 494 117 A1**
(43) Date of publication of application: **05.01.2005**
(21) Application number: 04014880.1
(22) Date of filing: 24.06.2004
(51) Int. Cl.: G06F 9/445

(54) **Electronic apparatus and parameter updating method**

(30) Priority: 30.06.2003 JP 2003187691; 07.06.2004 JP 2004168211
(71) Applicant: Ricoh Company Ltd., Tokyo 143-8555 (JP)
(72) Inventor: Kobayashi, Sayaka, Ohta-ku Tokyo (JP)
(74) Representative: Schwabe, Hans-Georg, Dipl.-Ing.

(57) **Abstract**

An electronic apparatus is provided with an updating unit (142) to update a value of a parameter depending on a parameter update request received via a network, and a rebooting unit (1421) to reboot the electronic apparatus based on an updated value of the parameter after sending a response with respect to the parameter update request.

## Description

### BACKGROUND OF THE INVENTION

### 1. Field of the Invention

The present invention generally relates to, and more particularly to electronic apparatuses and parameter updating methods, and more particularly to an electronic apparatus and a parameter updating method which update parameters via a network.

### 2. Description of the Related Art

Recently, not only general computers, but also various kinds of embedded devices (or embedded equipments), function as Web servers. For example, image processing apparatuses, such as printers, facsimile machines and copying machines, include apparatuses which provide various information by a Web page with respect to terminals and the like connected to the apparatuses via a network. The various information provided include status of devices, stored document information, spooled jobs, and address directories used for facsimile and electronic mail (e-mail) communications. An advantage of providing such information by the Web page is that the terminal which is to receive the information simply needs to have a general-purpose Web browser installed therein and that it is unnecessary to install a special software in the terminal. Other advantages of providing the information by the Web page are that it is possible to confirm information related to a device at a remote location, without being dependent on a platform of the terminal.

In addition, there recently are devices which not only provide the information, but which may be set with various parameter values by the Web page that is displayed by the Web browser of the terminal or the like connected to the devices via the network. When the parameters can be set to the device by the Web page that is displayed the Web browser of the terminal, the user can operate the device from a remote location. Furthermore, the user can set the parameters to the device based on rich information displayed by the Web page, using a familiar or easy-to-use interface such as a keyboard or a mouse.

However, depending on the parameters, updated values of the parameters are not reflected to the operation of the device unless the device is rebooted (or restarted). In such a case, it was conventionally necessary for an operator to update the parameter values of the device from a terminal which is provided at a location remote from the device, and to thereafter go to the location of the device and push a reset button or the like of the device so as to reboot the device. As a result, it was not possible to fully bring out the advantages of remotely operating the device from the terminal.

### SUMMARY OF THE INVENTION

Accordingly, it is a general object of the present invention to provide a novel and useful electronic apparatus and parameter updating method, in which the problems described above are suppressed.

Another and more specific object of the present invention is to provide an electronic apparatus and a parameter updating method, which can appropriately cope with a parameter update request received via a network.

Still another and more specific object of the present invention is to provide an electronic apparatus characterized by parameter updating means for updating a value of a parameter depending on a parameter update request received via a network; and first rebooting means for rebooting the electronic apparatus based on an updated value of the parameter after sending a response with respect to the parameter update request. According to the electronic apparatus of the present invention, it is possible to reboot the electronic apparatus after responding to the parameter update request, and for this reason, it is possible to carry out the rebooting after responding to a request source such as a terminal.

A further object of the present invention is to provide an electronic apparatus for updating a value of a parameter in response to an update request received via a network, characterized by judging means for judging whether or not a rebooting of the electronic apparatus is necessary depending on the parameter which is requested to be updated by the update request; and rebooting means for rebooting the electronic apparatus when the judging means judges that the rebooting of the electronic apparatus is necessary. According to the electronic apparatus of the present invention, it is possible to suppress an unnecessary rebooting from being carried out in the electronic apparatus.

Another object of the present invention is to provide a parameter updating method for an electronic apparatus, characterized by a parameter updating procedure updating a value of a parameter depending on a parameter update request received via a network; and a first rebooting procedure rebooting the electronic apparatus based on an updated value of the parameter after sending a response with respect to the parameter update request. According to the parameter updating method of the present invention, it is possible to reboot the electronic apparatus after responding to the parameter update request, and for this reason, it is possible to carry out the rebooting after responding to a request source such as a terminal.

Still another object of the present invention is to provide a parameter updating method for updating a value of a parameter in response to an update request received by an electronic apparatus via a network, characterized by a judging procedure judging whether or not a rebooting of the electronic apparatus is necessary depending on the parameter which is requested to be updated by the update request; and a rebooting procedure rebooting the electronic apparatus when the judging procedure judges that the rebooting of the electronic apparatus is necessary. According to the parameter updating method of the present invention, it is possible to suppress an unnecessary rebooting from being carried out in the electronic apparatus.

Other objects and further features of the present invention will be apparent from the following detailed description when read in conjunction with the accompanying drawings.

### BRIEF DESCRIPTION OF THE DRAWINGS

FIG. 1 is a diagram showing a functional structure of an image processing apparatus forming an embodiment of an electronic apparatus according to the present invention;
FIG. 2 is a diagram showing a functional structure of a Web application of the embodiment;
FIG. 3 is a sequence diagram for explaining a process for a case where a system parameter is updated;
FIG. 4 is a sequence diagram for explaining the process for the case where the system parameter is updated;
FIG. 5 is a diagram showing a parameter setting page that is displayed;
FIG. 6 is a diagram showing a structure of a parameter table;
FIG. 7 is a diagram showing processing status data;
FIG. 8 is a diagram for explaining processing status;
FIG. 9 is a diagram showing a response page that is displayed when executing a reboot;
FIG. 10 is a sequence diagram for explaining a process for a case where a network parameter is updated;
FIG. 11 is a sequence diagram for explaining a process for a case where a non-reboot parameter is updated;
FIG. 12 is a diagram showing a response page that is displayed when the non-reboot parameter is updated;
FIG. 13 is a sequence diagram for explaining a process for a case where parameter updating is rejected;
FIG. 14 is a diagram showing a response page that is displayed when rejecting parameter setting;
FIG. 15 is a sequence diagram for explaining a process for a case where a non-reboot parameter and a network parameter are simultaneously updated; and
FIG. 16 is a sequence diagram for explaining the process for the case where the non-reboot parameter and the network parameter are simultaneously updated.

### DESCRIPTION OF THE PREFERRED EMBODIMENTS

A description will be given of an embodiment of an electronic apparatus according to the present invention. This embodiment of the electronic apparatus employs an embodiment of a parameter updating method according to the present invention. In this embodiment, the present invention is applied to an image processing apparatus.

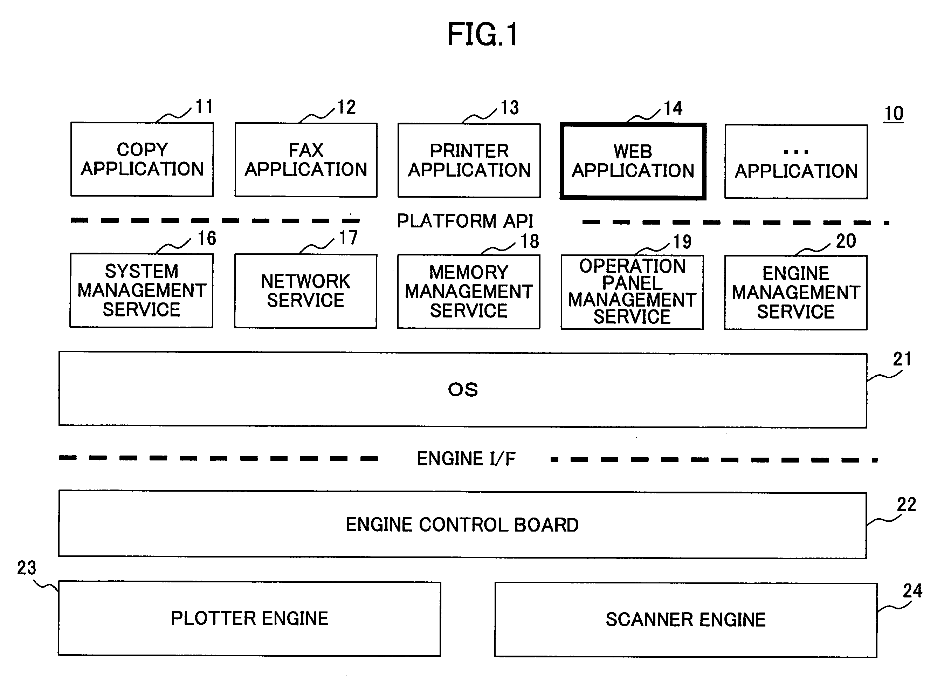

FIG. 1 is a diagram showing a functional structure of an image processing apparatus forming an embodiment of the electronic apparatus according to the present invention. An image processing apparatus 10 shown in FIG. 1 includes hardware resources, such as a plotter engine 23 and a scanner engine 24, for carrying out independent image processings, an engine control board 22, an Operating System (OS) 21, a system management service 16, a network service 17, a memory management service 18, an operation panel management service 19, an engine management service 20, and various kinds of applications, such as a copying application 11, a facsimile application 12, a printer application 13 and a Web application 14.

The engine control board 22 controls the independent functions of the image processing apparatus 10, such as the plotter engine 23 and the scanner engine 24, and provides the functions of the engine control board 22 to the OS 21 and the like via an engine interface (I/F).

The OS 21 is formed by a UNIX (registered trademark) operating system or the like, and executes in parallel the processes of the various software installed as applications, such as the copying application 11 and the facsimile application 12.

The system management service 16, the network service 17, the memory management service 18, the operation panel management service 19 and the engine management service 20 provide respective functions to an application in a higher layer (or level), such as the copying application 11, via an Application Programming Interface (API). In other words, the system management service 16 provides functions related to system management, and the network service 17 provides functions related to network communication. In addition, the memory management service 18 provide functions related to memory management, and the operation panel management service 19 provide functions related to an operation panel of the image processing apparatus 10. Further, the engine management service 20 provides functions for controlling the plotter engine 23 and the scanner engine 24 via the engine control board 22.

The copying application 11 provides copying functions, and the facsimile application 12 provides facsimile functions. The printer application 13 includes Page Description Language (PDL), Printer Control Language (PCL) and Post Script (PS), and provides printer functions. Moreover, the Web application 14 is formed by a parameter updating program that forms an important part of this embodiment. The Web application 14 causes a CPU or the like of the image processing apparatus 10 to carry out a parameter updating process for updating various parameters related to the functions of the image processing apparatus 10 based on a request from a terminal 50 which will be described later and is connected to the image processing apparatus 10 via a network.

Accordingly, the image processing apparatus 10 includes a plurality of applications to carry out processes peculiar to composite services of a printer, a copying machine or a facsimile machine.

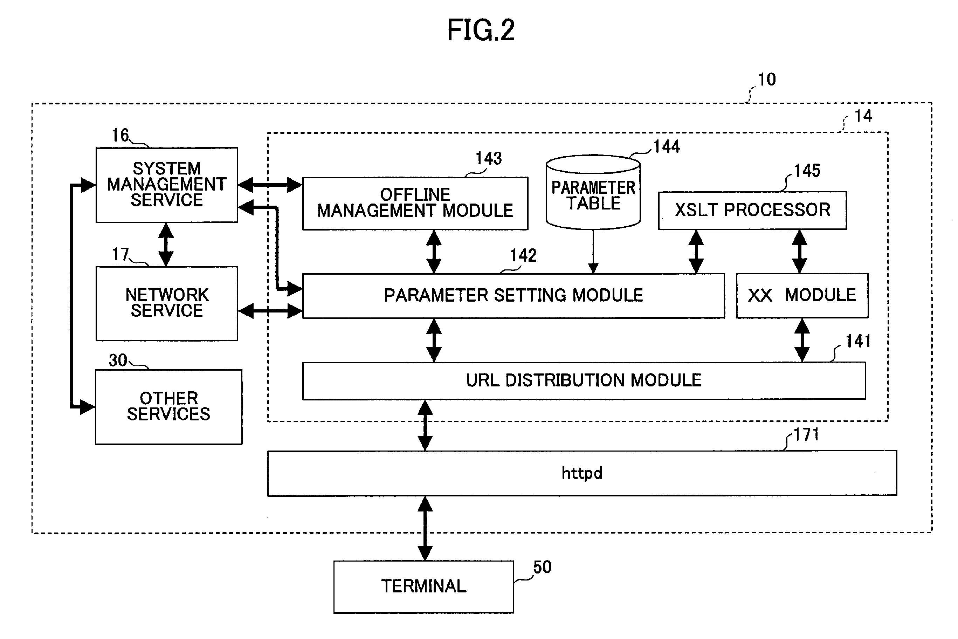

Next, a more detailed description will be given of the Web application 14. FIG. 2 is a diagram showing a functional structure of the Web application 14 of this embodiment. The functions of the Web application 14 are called when an Hypertext Transfer Protocol Demon (or Daemon) (httpd) 71 receives a Hypertext Transfer Protocol (HTTP) request from the terminal 50 via the network. The network may be formed by one or more cable networks, one or more wireless networks or, a combination of cable and wireless networks. The cable networks may be optical networks. In other words, the communication between the image processing apparatus 10 and the terminal 50 may be made by cable or wireless communication. The httpd 171 is formed by a resident Demon (or Daemon) program which controls HTTP communications with the terminal 50, so as to enable the image processing apparatus 10 to receive the HTTP request from the terminal 50. The httpd 171 calls the Web application 14 based on the HTTP request, and sends to the terminal 50 a Web page that is generated by the Web application 14.

The Web application 14 includes an Uniform Resource Locator (URL) distribution module 141, a parameter setting module 142, an offline management module 143, a parameter table 144 and the like. The URL distribution module 141 is used to call a page module corresponding to an URL that is specified by the terminal 50. The page module is a program that is provided for each URL, and in this embodiment, corresponds to the parameter setting module 142 or the like. The parameter setting module 142 is a page module for carrying out a parameter updating process to update the parameter values of the image processing apparatus 10. The parameter setting module 142 also controls processes such as a reboot (or restart) of the image processing apparatus 10 so as to validate the updating of the parameter values, that is, to reflect the updated parameter values to the operation of the image processing apparatus 10.

The offline management module 143 realizes an exclusive control when the parameter setting module 142 carries out the parameter updating process. In the image processing apparatus 10 of this embodiment, the process for validating the updating of the parameter values differs depending on the kind of parameters that are updated.

In this specification, parameters which affect the entire system when values thereof are updated, and the updating of the parameters is not reflected to the operation of the image processing apparatus 10 unless the image processing apparatus 10 is rebooted, will be referred to as "system parameters". On the other hand, parameters which affect a only part of the entire system, that is, affect only some of the processes related to specific functions of the processes that are started in the image processing apparatus 10, and the updating of the parameters is not reflected to the operation of the image processing apparatus 10 unless the processes related to the specific functions are rebooted, will be referred to as "service parameters".

For example, when the system parameters are updated, the parameter setting module 142 requests rebooting of the entire system with respect to the system management service 16, that is, requests a system reboot of the image processing apparatus 10 itself. On the other hand, when the service parameters related to a network function are updated, the parameter setting module 142 requests a rebooting of the processes related to the network function with respect to the network service 17, that is, requests a network reboot.

In the following description, parameters which are immediately reflected to the operation of the image processing apparatus 10 when updated, even when a reboot such as the system reboot and the network reboot is not carried out, will be referred to as "non-reboot parameters". When the non-reboot parameters are updated, the parameter setting module 142 does not carry out a reboot.

The parameter table 144 manages a corresponding relationship between each parameter and a process that is to be carried out depending on the updating of the parameter value. The parameter setting module 142 uses the parameter table 144 to judge the processes to be carried out depending on the updating of the parameter.

An Extensible Stylesheet Language Transformations (XSLT) processor 145 carries out an Extensible Stylesheet Language (XSL) conversion based on Extensible Markup Language (XML) data and XSL data, and generates XML data, HTML data and the linke according to format information of the XSL data. The XSLT processor 145 is used in common by a plurality of page modules, such as the parameter setting module 142, and generates a Web page based on the XML data generated by the parameter setting module 142 or the like.

Other services 30 include the various kinds of services provided by the image processing apparatus 10 shown in FIG. 1, such as the memory management service 18 and the operation panel management service 19, and the various kinds of applications, such as the copying application 11 and the facsimile application 12. Each of the other services 30 is booted as an independent process, and carry out in parallel the processes related to the respective functions.

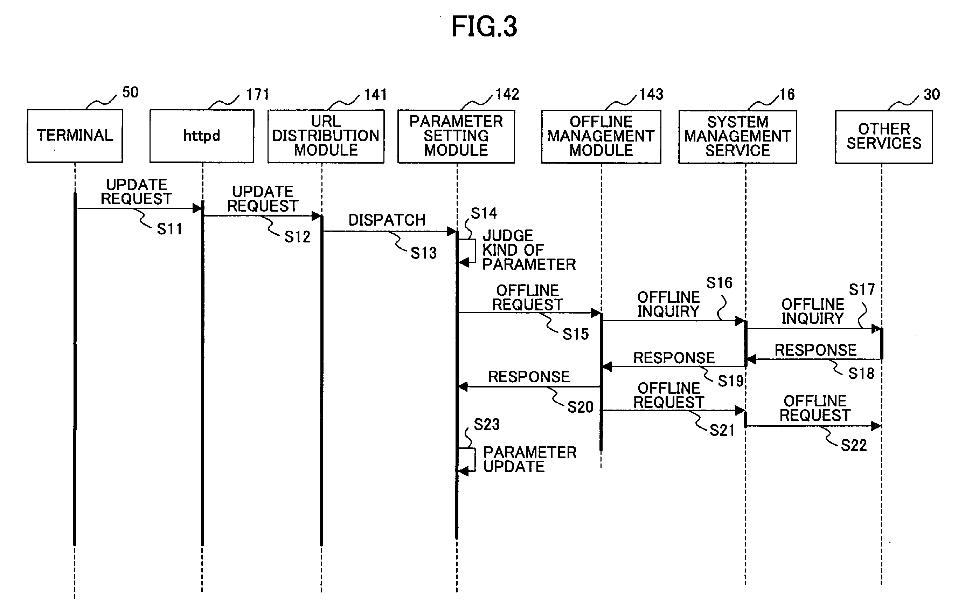

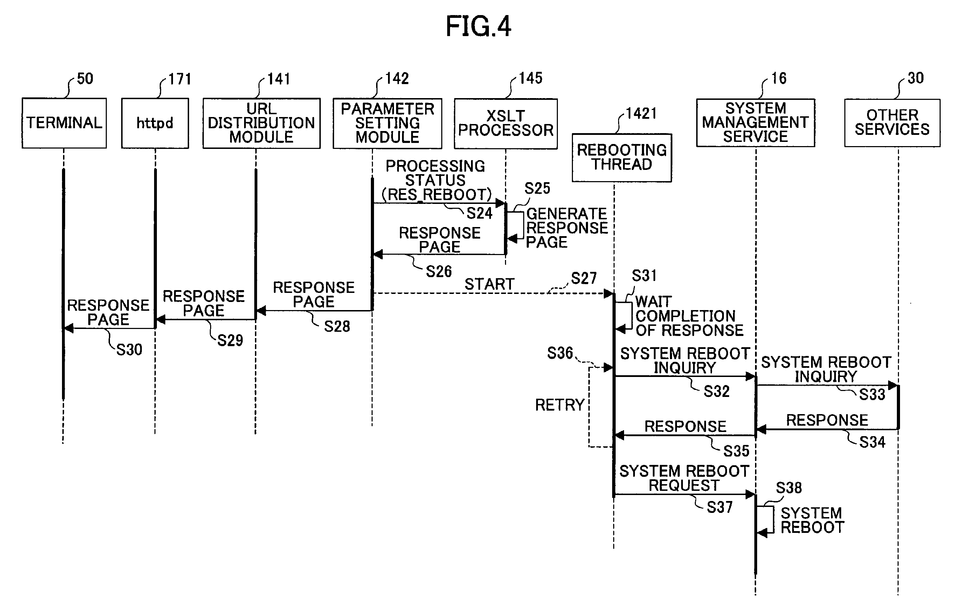

Next, a description will be given of a processing procedure of the image processing apparatus 10 shown in FIG. 2. FIGS. 3 and 4 are sequence diagrams for explaining a process for a case where a system parameter is updated.

When a user (or operator) inputs a new value for a parameter of the image processing apparatus 10 on a parameter setting page that is displayed by a Web browser of the terminal 50, the terminal sends an HTTP request (parameter update request with respect to the URL of the parameter setting module 142) requesting updating of the parameter with respect to the image processing apparatus 10, in a step S11.

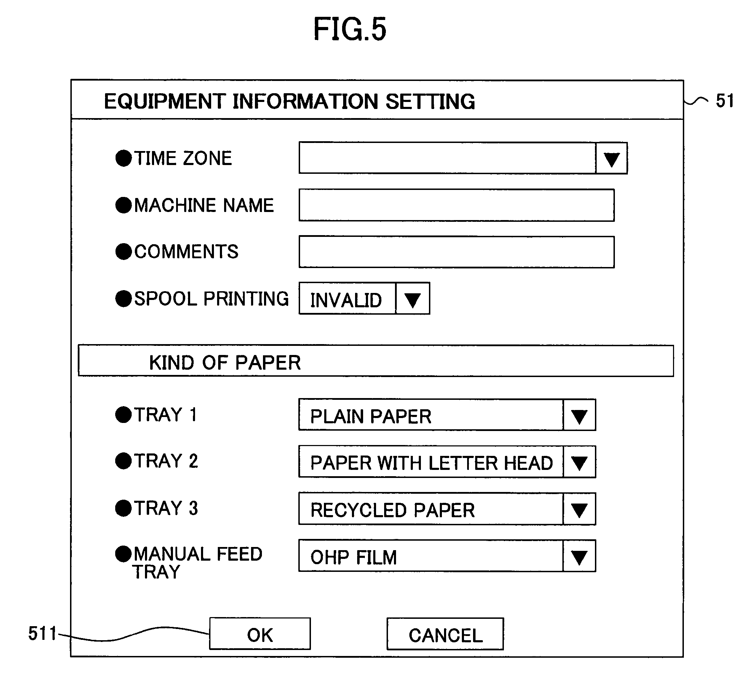

FIG. 5 is a diagram showing the parameter setting page that is displayed. As shown in FIG. 5, a time zone, a machine name, comments, spool printing, kinds of paper and the like for trays, and the like can be set, as the parameters of the image processing apparatus 10, on a parameter setting page 51. Accordingly, when the uses changes the value of the time zone and clicks (or selects) an OK button 511 on the parameter setting page 51, for example, the process of the step S11 is started.

After the step S11, the httpd 171 of the image processing apparatus 10 analyzes the HTTP request from the terminal 50 and calls the URL distribution module 141, in a step S12. Based on the URL included in the HTTP request, the URL distribution module 141 calls a page module corresponding to the URL, that is, the parameter setting module 142, in a step S13. After the step S13, the parameter setting module 142 judges the kind of parameter (time zone in this particular case) that is to be updated, based on the parameter table 144, and judges the process that is to be carried out depending on the updating of the parameter value, in a step S14.

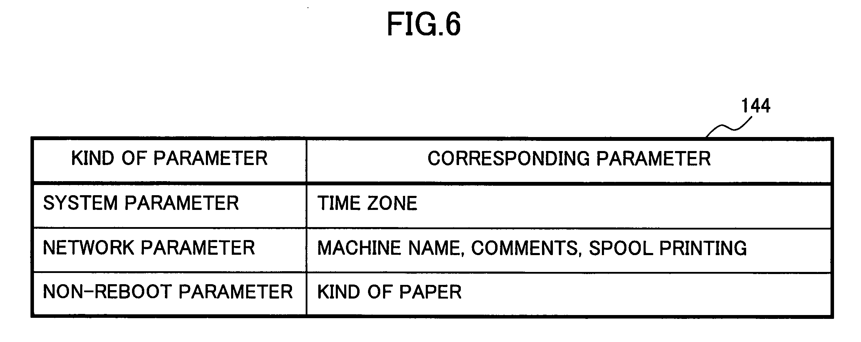

FIG. 6 is a diagram showing a structure of the parameter table. As shown in FIG. 6, the parameter table 144 manages the corresponding relationship of the kind of parameter that is based on the process to be carried out depending on the change in parameter value, and each parameter. In the case of the parameter table 144 shown in FIG. 6, the time zone corresponds to the system parameter. The machine name, the comments and the spool printing correspond to the network parameter. In addition, the kind of paper corresponds to the non-reboot parameter. Hence, the parameter setting module 142 judges that the time zone corresponds the system parameter, based on the parameter table 144, and judges that the system reboot needs to be carried out when the time zone is updated.

After the step S14, the parameter setting module 142 sends an offline request requesting an exclusive process (offline process) for prohibiting the other services 30 from updating the time zone, with respect to the offline management module 143, as a preparation for updating the time zone, in a step S15. The offline management module 143 which receives the offline request sends an offline inquiry inquiring whether or not the parameter (time zone) to be updated is to be prohibited from being updated, with respect to the system management service 16, in a step S16.

The system management service 16 sends an offline inquiry with respect to each of the other services 30, in a step S17. Each of the other services 30 sends a response to the system management service 16, in a step S18. The system management service 16 notifies the response from each of the other services 30 to the offline management module 143, in a step S19.
The offline management module 143 sends a response with respect to the parameter setting module 142, in a step S20.

Furthermore, when all of the responses from the other services 30 indicate that it is possible to prohibit the updating of the time zone, the offline management module 143 sends an offline request again requesting updating of the time zone to be prohibited, with respect to the system management service 16, in a step S21. Next, the system management service 16 sends an offline request with respect to the other services 30, in a step S22. The parameter setting module 142, waiting for the completion of the offline process of the steps S15 through S22, updates the time zone after confirming the completion of the offline process, in a step S23. Of the other services 30, those services dependent on at least the parameter that is to be updated, need to be subjected to the offline process.

After the step S23, the process advances to a step S24 shown in FIG. 4. The parameter setting module 142 outputs XML format data indicating a processing status (hereinafter referred to as "processing status data") with respect to the XSLT processor 145, and requests the XSLT processor 145 to generate a Web page (hereinafter referred to as a "response page") for displaying the processing status at the terminal 50 in response to the parameter update request from the terminal 50, in the step S24.

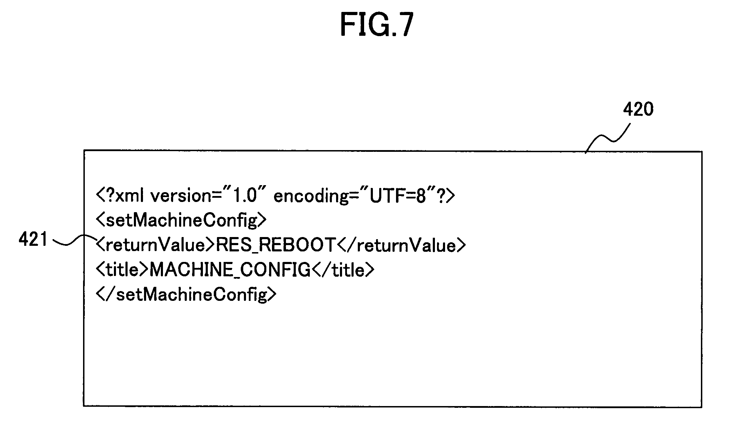

FIG. 7 is a diagram showing the processing status data. In a processing status data 420 shown in FIG. 7, a value surrounded by <returnValue> tags in a description 421 indicates the processing status.

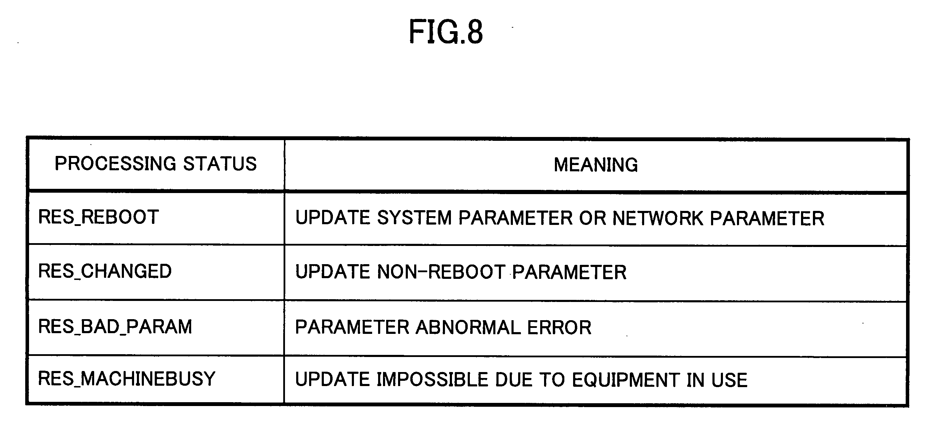

FIG. 8 is a diagram for explaining the processing status. As shown in FIG. 8, the processing status includes "RES_BOOT", "RES_CHANGED", "RES_BAD_PARAM", "RES_MACHINEBUSY" and the like, for example. The status "RES_BOOT" indicates that a parameter which requires rebooting, such as a system parameter and a network parameter, has been updated. The status "RES_CHANGED" indicates that a non-reboot parameter has been updated. The status "RES_BAD_PARAM" indicates that a parameter is abnormal or faulty. The status "RES_MACHINEBUSY" indicates that the parameter cannot be updated due to reasons such as it is during a process of the image processing apparatus 10 which cannot be discontinued interrupted. In this particular case, the system parameter has been updated, and for this reason, the status "RES_REBOOT" is output by the process status data 420.

After the step S24, the XSLT processor 145 generates an HTML format response page by applying the XSL data in which the format information of the response page is predefined, with respect to the processing status data 420, and carrying out an XSL conversion, in a step S25. After the step S25, the XSLT processor 145 outputs the generated response page to the parameter setting module 142, in a step S26.

As described above, the time zone is a system parameter. For this reason, merely updating the value of the time zone will not reflect the updated value of the time zone to the operation of the image processing apparatus 10. Hence, the parameter setting module 142 carries out the process of a step S27 and the subsequent steps in order to carry out a system reboot, so as to reflect the updated value of the time zone to the operation of the image processing apparatus 10 based on a judgement result of the step S14.

In other words, the parameter setting module 142 starts a rebooting thread 1421 for carrying out the system reboot, in a step S27. The rebooting thread 1421 is started for the following reasons. That is, the Web browser of the terminal 50 at this point in time waits for a response (HTTP response) from the image processing apparatus 10. Accordingly, if the system reboot is carried out in the image processing apparatus 10 in this state, it no longer becomes possible for the image processing apparatus 10 to maintain a session with the terminal 50, and no response will be sent to the terminal 50 which sent the parameter update request. It is thus necessary to send the HTTP response to the terminal 50 before the system reboot is carried out. However, if the HTTP response is simply sent to the terminal 50, there is nothing to trigger the reboot process unless the parameter setting module 142 is called again based on the HTTP request. For these reasons, the rebooting thread 1421 is started, and the response is sent to the terminal 50, before making the rebooting thread 142 carry out the system reboot.

After the step S27, the parameter setting module 142 outputs the response page that is generated by the XSLT processor 145 to the URL distribution module 141, in a step S28, and the URL distribution module 141 outputs the response page, as it is, to the httpd 171, in a step S29. After the step S29, the httpd 171 sends the response page to the terminal 50, in a step S30, and the response page is displayed by the Web browser of the terminal 50.

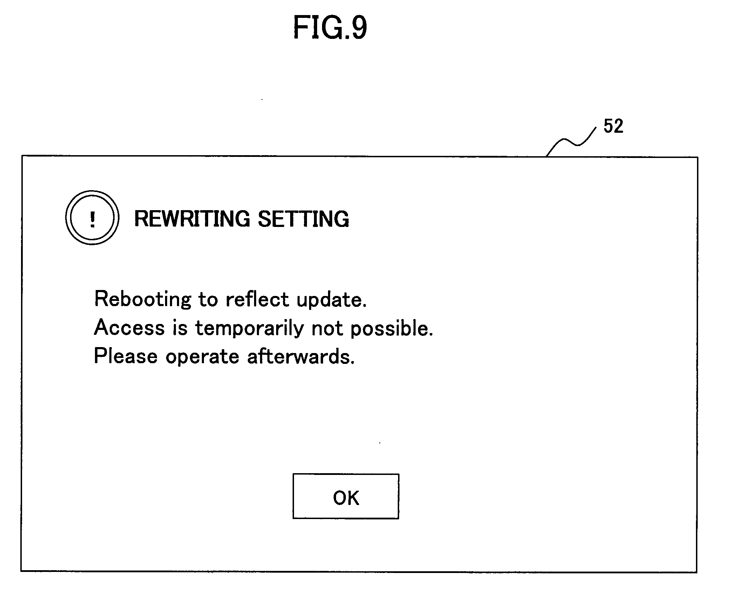

FIG. 9 is a diagram showing the response page that is displayed when executing the reboot. A response page 52 shown in FIG. 9 indicates that an access cannot be made temporarily since a reboot will be carried out. Hence, the user can confirm from the response page 52 that the parameter has been updated and that the reboot is being carried out in the image processing apparatus 10.

On the other hand, a process for executing the system reboot is carried out by the rebooting thread 1421 which is started in the step S27. First, the rebooting thread 1421 waits for the response with respect to the terminal 50 (that is, the sending of the response page 52) to be completed, in a step S31. The completion of the response with respect to the terminal 50 is waited, in order to prevent the reboot from being started before the response is sent to the terminal 50, as described above.

After the step S31, the rebooting thread 1421 sends a system reboot inquiry with respect to the system management service 16 to inquire whether or not the system reboot is possible, in a step S32. The system management service 16 sends a system reboot inquiry with respect to each of the other services 30, in a step S33, similarly to making the offline inquiry described above. Of all of the other services 30, the system reboot inquiry only needs to be made with respect to those services which are at least affected by the system reboot.

In response to the system reboot inquiry, each of the other services 30 sends a response indicating whether or not the system reboot is possible depending on its processing state, in a step S34. The system management service 16 outputs the response from each of the other services 30 with respect to the system reboot inquiry, with respect to the rebooting thread 1421, in a step S35.

In a case where the response from at least one of the other services 30 indicates that the system reboot is not possible (that is, impossible), the rebooting thread 1421 repeats the system reboot inquiry until the system reboot becomes possible, in a step S36. On the other hand, if the response from all of the other services 300 indicate that the system reboot is possible, the rebooting thread 1421 sends a system reboot request to the system management service 16, in a step s37. The system management service 16 carries out the system reboot in a step S38, and the updated time zone is reflected to the operation of the image processing apparatus 10 that is carried out thereafter.

According to the image processing apparatus 10, the image processing apparatus 10 is rebooted by waiting for the completion of the response with respect to the parameter update request, as described above in conjunction with FIGS. 3 and 4. Hence, it is possible to update the parameter and reboot the image processing apparatus 10, after making the response with respect to the terminal 50.

In addition, since the rebooting of the image processing apparatus 10 is carried out after inquiring whether or not the rebooting is possible to the other services 30 which are affected by the rebooting of the image processing apparatus 10. As a result, it is possible to prevent system abnormalities, such as data destruction, which would otherwise be generated if the rebooting of the image processing apparatus 10 were carried out forcibly.

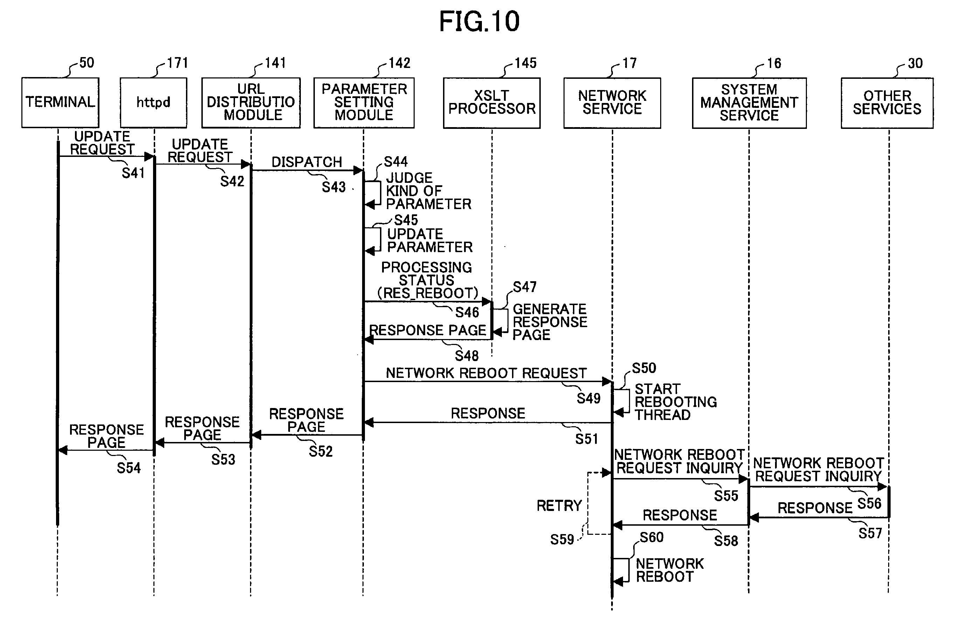

Next, a description will be given of the process of the image processing apparatus when updating the network parameter. FIG. 10 is a sequence diagram for explaining the process for the case where a network parameter is updated.

When the user changes the machine name and clicks (or selects) the OK button 511 on the parameter setting page 51 shown in FIG. 5, the terminal 50 sends an HTTP request to the image processing apparatus 10 requesting updating of the machine name, in a step S41 shown in FIG. 10. The httpd 171 analyzes the HTTP request from the terminal 50 and calls the URL distribution module 141, in a step S42. Based on the URL included in the HTTP request, the URL distribution module 141 calls a page module corresponding to the URL, that is, the parameter setting module 142, in a step S43. In other words, the steps S42 and S43 are carried out similarly to the steps S12 and S13 shown in FIG. 3.

After the step S43, the parameter setting module 142 judges the kind of parameter (machine name in this particular case) that is to be updated, based on the parameter table 144 shown in FIG. 6, in a step S44. Hence, the parameter setting module 142 judges that the machine name to be updated corresponds to the network parameter, and that the network reboot is necessary depending on the updating of the machine name. After the step S44, the parameter setting module 142 updates the machine name to a new value, in a step S45. An offline process, such as that of the steps S15 through S22 shown in FIG. 3, may also be carried out when updating the machine name, similarly as when updating the time zone.

After the step S45, the parameter setting module 142 sends a process status data indicating the status RES_REBOOT, together with a request to generate the response page 52 shown in FIG. 9 to the XSLT processor 145, in a step S46. The XSLT processor 145 generates the response page 52 based on the process status data in a step S47, and the XSLT processor 145 outputs the generated response page 52 to the parameter setting module 142 in a step S48.

After the step S48, the parameter setting module 142 sends a network reboot request to the network service 17, so as to reflect the updating of the machine name to the operation of the image processing apparatus 10, in a step S49. After the step S49, the network service 17 starts a rebooting thread for carrying out the network reboot, in a step S50. This rebooting thread is started for reasons similar to the reasons the parameter setting module 142 starts the rebooting thread 1421 in FIG. 4. In other words, in the case of the network reboot, not the entire system but the processes related to the network-related functions are rebooted. But when the processes related to the network-related functions are temporarily ended, the communication between the image processing apparatus 10 and the terminal 50 becomes temporarily impossible. Accordingly, when viewed from the terminal 50, a state similar to a case where the system reboot is carried out, may be generated.

After the step S50, the network service 17 sends a response with respect to the parameter setting module 142 before carrying out the network reboot, in a step S51. When the parameter setting module 142 which receives the response from the network service 17 outputs the response page 52 to the URL distribution module 141 in a step S52, the response page 52 is thereafter sent to the terminal 50 in steps S53 and S54 by a procedure similar to that of the steps S29 and S30 shown in FIG. 4.

On the other hand, a process for executing the network reboot is carried out by the rebooting thread which is started by the network service 17. In the following description, the process of the rebooting thread is described as a process of the network service 17 for the sake of convenience. After sending the response 52 to the parameter setting module 142 in the step S51, the network service 17 waits for the sending of the response page 52 with respect to the terminal 50 to be completed, and when the completion is confirmed, the network service 17 sends a network reboot request inquiry with respect to the system management service 16 inquiring whether or not the network reboot is possible, in a step S55.

Similarly to the case with respect to the system reboot inquiry, the system management service 16 sends a network reboot request inquiry with respect to each of the other services 30, in a step S56. Of all of the other services 30, the system reboot request inquiry may be made with respect to at least those services which are dependent on the parameter to be updated.

In response to the network reboot request inquiry, each of the other services 30 sends a response indicating whether or not the network reboot is possible depending on its processing state, in a step S57. The system management service 16 outputs the response from each of the other services 30 with respect to the network reboot request inquiry, with respect to the network service 17, in a step S58. In a case where the response from at least one of the other services 30 indicates that the network reboot is not possible (that is, impossible), the network service 17 repeats the network reboot request inquiry until the network reboot becomes possible, in a step S59.

On the other hand, if the response from all of the other services 300 indicate that the network reboot is possible, the network service 17 carries out the network reboot in a step S60, and the updated machine name is reflected to the operation of the image processing apparatus 10 that is carried out thereafter.

According to the image processing apparatus 10, if the parameter to be updated only affects the processes related to specific functions, not the image processing apparatus 10 itself but only the processes related to the specific functions are rebooted, as described above in conjunction with FIG. 10. Hence, it is possible to suppress the image processing apparatus 10 from being rebooted unnecessarily, and the processes which are unaffected by the updating of the parameter can be continued without being discontinued or interrupted, to thereby improve the usefulness and/or benefits of the image processing apparatus 10.

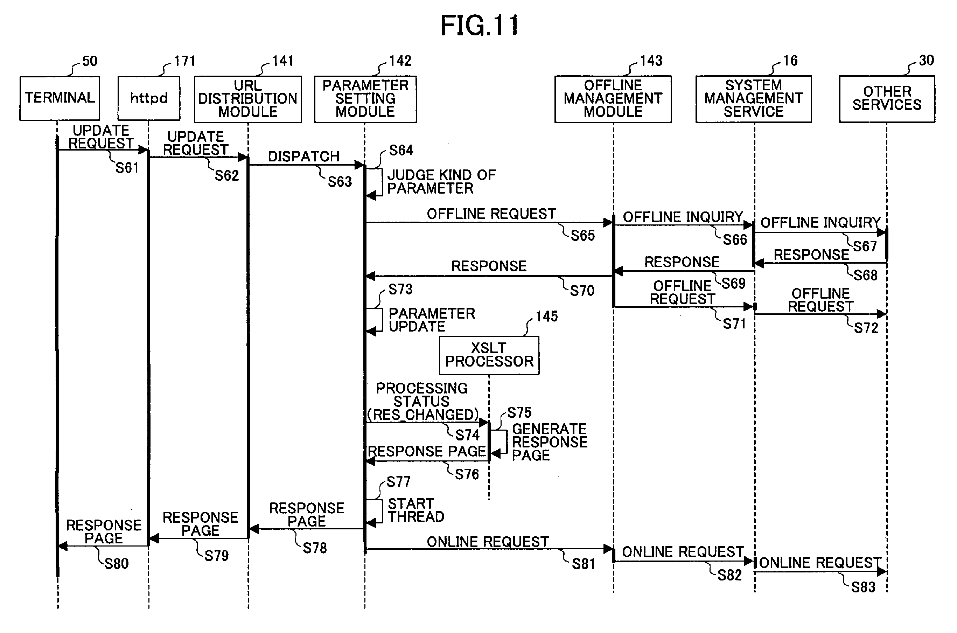

Next, a description will be given of the process of the image processing apparatus when updating the non-reboot parameter. FIG. 11 is a sequence diagram for explaining the process for the case where a non-reboot parameter is updated.

When the user changes the kind of paper for the tray 1 and clicks (or selects) the OK button 511 on the parameter setting page 51 shown in FIG. 5, the terminal 50 sends an HTTP request to the image processing apparatus 10 requesting updating of the kind of paper for the tray 1, in a step S61 shown in FIG. 11. The httpd 171 analyzes the HTTP request from the terminal 50 and calls the URL distribution module 141, in a step S62. Based on the URL included in the HTTP request, the URL distribution module 141 calls a page module corresponding to the URL, that is, the parameter setting module 142, in a step S63. In other words, the steps S62 and S63 are carried out similarly to the steps S12 and S13 shown in FIG. 3.

The parameter setting module 142 judges the kind of parameter (kind of paper for the tray 1 in this particular case) that is to be updated, based on the parameter table 144 shown in FIG. 6, in a step S64. Hence, the parameter setting module 142 judges that the kind of paper for the tray 1 to be updated corresponds to the non-reboot parameter, and that the reboot is unnecessary regardless of the updating of the kind of paper for the tray 1. After the step S64, the parameter setting module 142 sends an offline request to the offline management module 143 so as to prohibit the updating with respect to the kind of paper, in a step S65. An offline process of the steps S65 through S72 is similar to that of the steps S15 through S22 shown in FIG. 3.

The parameter setting module 142, waiting for the completion of the offline process of the steps S65 through S72, updates the kind of paper for the tray 1 after confirming the completion of the offline process, in a step S73. After the step S73, the parameter setting module 142 sends a process status data indicating the status RES_CHANGED, together with a request to generate a response page to the XSLT processor 145, in a step S74. The XSLT processor 145 generates the response page based on the process status data in a step S75, and the XSLT processor 145 outputs the generated response page to the parameter setting module 142 in a step S76.

After the step S76, the parameter setting module 142 starts a thread for carrying out the process of a step S81 and subsequent steps, in a step S77. This thread is started to respond to the terminal 50 without waiting for the completion of the process of the step S81 and the subsequent steps, so as to quickly release the terminal 50 from the waiting state.

After the step S77, the process advances to a step S78. The parameter setting module 142 outputs the response page to the URL distribution module 141 in the step S78. Thereafter, the response page is sent to the terminal 50 in steps S79 and S80, by a procedure similar to that of the steps S29 and S30 shown in FIG. 4.

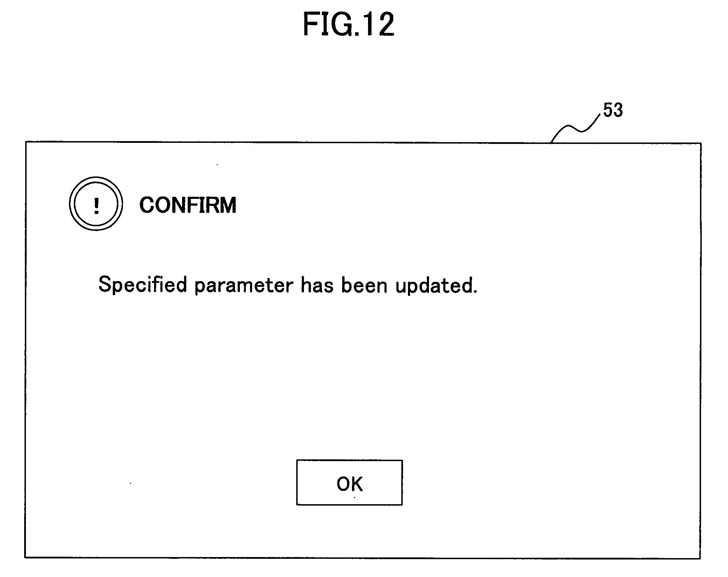

FIG. 12 is a diagram showing the response page that is displayed when the non-reboot parameter is updated. As shown in FIG. 12, a response page 53 includes a message indicating that the parameter has been updated. Hence, the user can confirm from the response page 53 that the parameter has been updated.

On the other hand, the thread which is started by the parameter setting module 142 carries out an online process for returning those other service 30 that where prohibited from updating the parameter back to their original states. In the following description, the process of the thread is described as a process of the parameter setting module 142 for the sake of convenience.

In parallel to outputting the response page 53 to the URL distribution module 141 in the step S78, the parameter setting module 142 sends an online request to the offline management module 143 requesting cancellation of the prohibiting of the updating of the parameter, in a step S81. The offline management module 143 sends the online request from the parameter setting module 142 to the system management service 16, in a step S82. The system management service 16 sends an online request with respect to each of the other services 30 that made the offline request, in a step S83. Each of the other services 30 that receives the online request returns from its offline state (that is, the state where the updating of the parameter is prohibited), and the kind of paper for the tray 1, that is newly set, is reflected to the operation of the image processing apparatus 10 carried out thereafter.

According to the image processing apparatus 10, the reboot is not simply carried out regardless of the kind of parameter, but instead, no reboot is carried out if the parameter to be updated does not require the rebooting, as described above in conjunction with FIG. 11. For this reason, compared to the case where the reboot is simply carried out regardless of the kind of parameter, it is possible to improve the usefulness and/or benefits of the image processing apparatus 10.

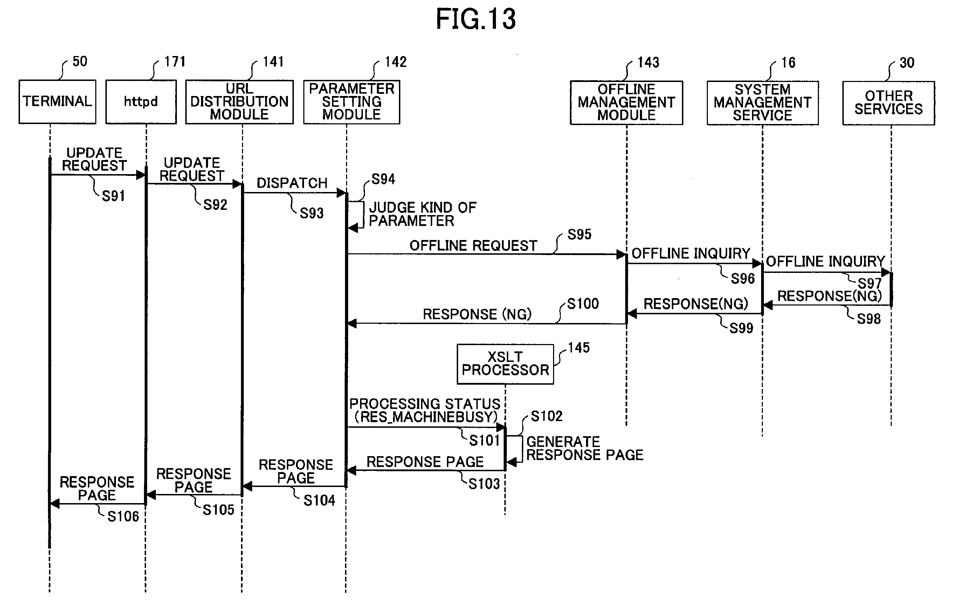

Next, a description will be given of a case where the updating of the parameter is rejected. FIG. 13 is a sequence diagram for explaining a process for the case where parameter updating is rejected.

In FIG. 13, the process of steps S91 through S97 is similar to the process of the steps S61 through S67 shown in FIG. 11. In other words, the parameter setting module 142 is called based on a non-reboot parameter update request from the terminal 50, in the steps S91 through S93. Furthermore, the system management service 16 sends an offline inquiry to each of the other services 30 based on an offline request from the parameter setting module 142, in the steps S95 through S97.

After the step S97, the process advances to a step S98. Each of the other services 30 which receives the offline inquiry sends a rejection response with respect to the system management service 16 indicating that prohibiting the parameter updating is rejected due to reasons such as it is during a process of the image processing apparatus 10 which cannot be discontinued interrupted, in the step S98. The system management service 16 sends the rejection response from the other services 30 to the offline management module 143 in a step S99, and offline management module 143 sends the rejection response to the parameter setting module 142 in a step S100. After the step S100, the parameter setting module 142 sends a process status data indicating the status RES_MACHINEBUSY (that is, indicating the rejection response), together with a request to generate a response page to the XSLT processor 145, in a step S101. The XSLT processor 145 generates the response page based on the process status data in a step S102, and the XSLT processor 145 outputs the generated response page to the parameter setting module 142 in a step S103.

After the step S103, the parameter setting module 142 sends the response page to the URL distribution module 141 in a step S104. Thereafter, the response page is sent to the terminal 50 by steps S105 and S106 which carry out a procedure similar to that of the steps S29 and S30 shown in FIG. 4.

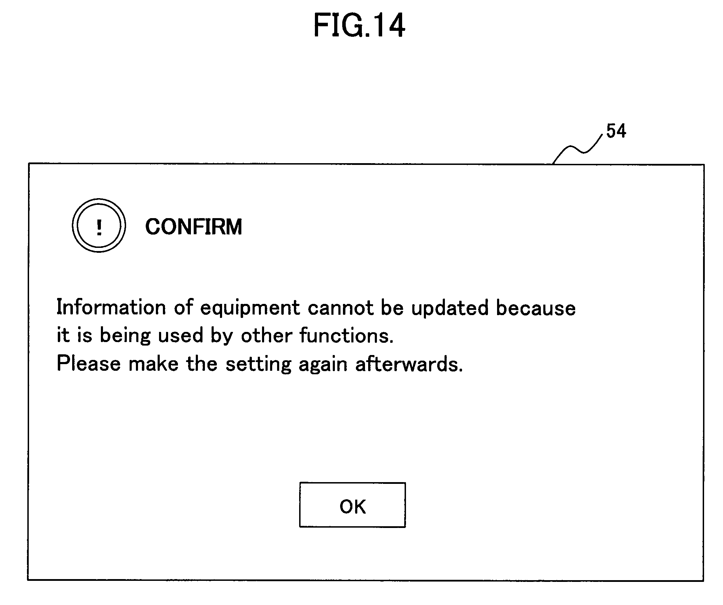

FIG. 14 is a diagram showing the response page that is displayed when rejecting the parameter setting (or parameter updating). As shown in FIG. 14, a response page 54 includes a message indicating that the parameter cannot be updated. Hence, the user can confirm from the response page 54 that the updating of the parameter has failed.

In each of the cases described above, it is assumed that the system parameter, the network parameter and the non-reboot parameter are independently regarded as the updating targets. However, it is of course possible to update at least two of the system parameter, the network parameter and the non-reboot parameter simultaneously. Next, a description will be given of a case where the non-reboot parameter and the network parameter are updated simultaneously.

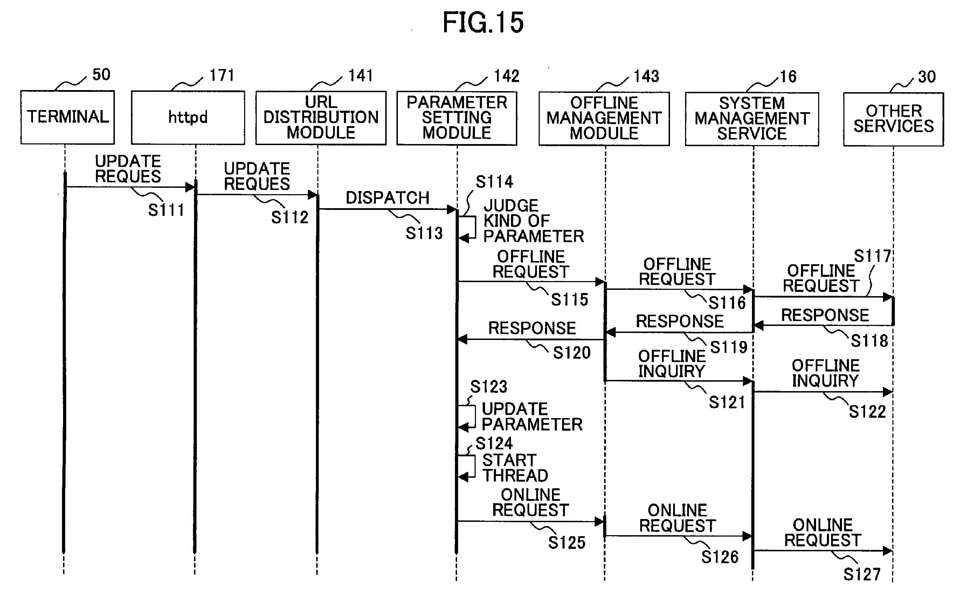

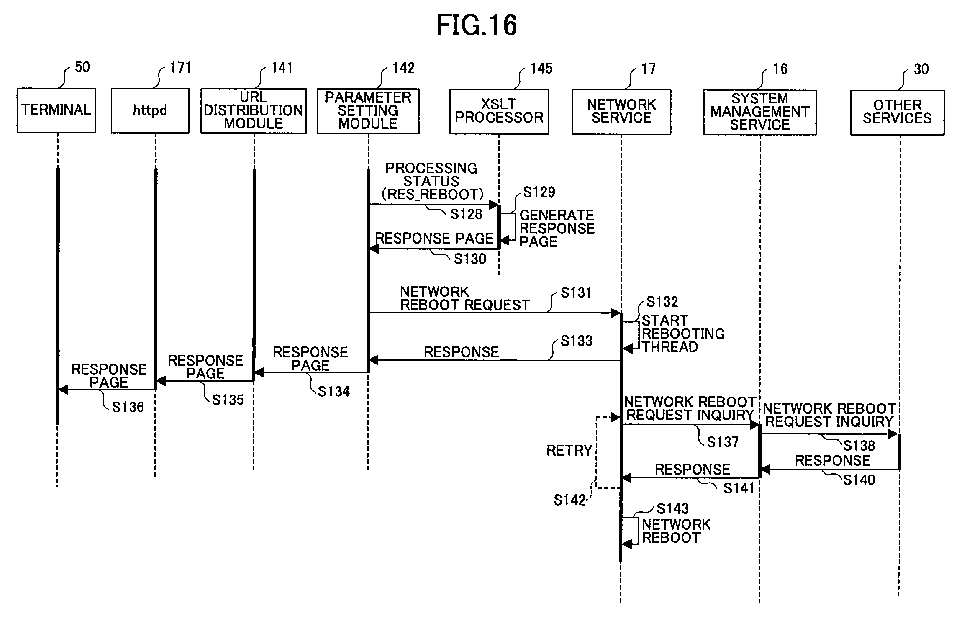

FIGS. 15 and 16 are sequence diagrams for explaining a process for the case where the non-reboot parameter and the network parameter are simultaneously updated.

When the user changes the kind of paper for the tray 1 and the machine name and clicks (or selects) the OK button 511 on the parameter setting page 51 shown in FIG. 5, the terminal 50 sends an HTTP request to the image processing apparatus 10 requesting updating of the kind of paper for the tray 1 and the machine name, in a step S111 shown in FIG. 15.

When the httpd 171 receives the HTTP request from the terminal 50, the parameter setting module 142 is called by a procedure of steps S112 and S113, similarly to the procedure of the steps S62 and S63 shown in FIG. 11.

Based on the parameter table 144 shown in FIG. 6, the parameter setting module 142 judges that the kind of paper for the tray to be updated corresponds to the non-reboot parameter and the machine name to be updated corresponds to the network parameter, and judges whether or not an offline process and a network reboot are necessary depending on the updating of the parameter values, in a step S114.

The process advances to a step S115 after the step S114. An offline process is carried out by the steps S115 through S122 which carry out a procedure similar to that of the steps S65 through S72 shown in FIG. 11. After the step S122, the process advances to a step S123. The parameter setting module 142, waiting for the completion of the offline process, updates the kind of paper for the tray and the machine name after confirming the completion of the offline process, in the step S123. The process advances to a step S124 after the step S123. An online process carried out by the steps S124 through 127 which carry out a procedure similar to that of the steps S77 and S81 through S83 shown in FIG. 11.

After the step S127, the process advances to a step S128 shown in FIG. 16. A procedure of the steps S128 through S143 is similar to that of the steps S46 through S60 shown in FIG. 10. In other words, the response page 52 shown in FIG. 9 is sent to the terminal 50 by the steps S134 through S136, and the network reboot process is carried out by the steps S131, S132 and S137 through S143.

Therefore, the values of the different kinds of parameters can be updated simultaneously in this manner.

Further, the present invention is not limited to these embodiments, but various variations and modifications may be made without departing from the scope of the present invention.

## Claims

1. An electronic apparatus **characterized by**:
parameter updating means (142) for updating a value of a parameter depending on a parameter update request received via a network; and
first rebooting means (1421) for rebooting the electronic apparatus based on an updated value of the parameter after sending a response with respect to the parameter update request.

2. The electronic apparatus as claimed in claim 1, **characterized in that** said first rebooting means reboots the electronic apparatus by waiting for the sending of the response with respect to the parameter update request to be completed.

3. The electronic apparatus as claimed in claim 1 or 2, **characterized in that**:
said parameter updating means judges a process that is to be carried out depending on the parameter requested to be updated by the parameter update request; and
said first rebooting means reboots the electronic apparatus when said parameter updating means judges that a rebooting of the electronic apparatus is necessary.

4. The electronic apparatus as claimed in claim 3, further **characterized by**:
parameter managing means (144) for managing a corresponding relationship of each parameter and a process to be carried out when the parameter is updated, and
said parameter updating means judges whether or not the electronic apparatus is to be rebooted when the parameter is updated in response to the parameter update request, based on the corresponding relationship.

5. The electronic apparatus as claimed in any of claims 1 to 4, **characterized in that** said first rebooting means confirms whether or not rebooting of the electronic apparatus is possible with respect to processes at least affected by the rebooting of the electronic apparatus, of processes started in the electronic apparatus, and reboots the electronic apparatus, if possible, with respect to all of the processes at least affected by the rebooting of the electronic apparatus.

6. The electronic apparatus as claimed in any of claims 1 to 5, **characterized in that** said parameter updating means updates the value of the parameter, by prohibiting updating of the parameter with respect to processes dependent on at least the parameter to be updated in response to the parameter update request, of processes started in the electronic apparatus.

7. The electronic apparatus as claimed in claim 6, **characterized in that** said parameter updating means confirms whether or not updating of the parameter is prohibited with respect to processes dependent on at least the parameter to be updated in response to the parameter update request, of processes started in the electronic apparatus, and updates the value of the parameter when the updating of the parameter with respect to all of the processes dependent on at least the parameter to be updated is prohibitable.

8. The electronic apparatus as claimed in any of claims 3 to 7, further **characterized by**:
second rebooting means (17) for restarting a process which is dependent on the parameter which is to be updated in response to the parameter update request, of processes started in the electronic apparatus, when said parameter updating means judges that restarting of said process is necessary.

9. The electronic apparatus as claimed in claim 8, **characterized in that** said second rebooting means confirms whether or not a process that is dependent on at least the parameter to be updated in response to the parameter update request, of processes started in the electronic apparatus, is restartable, and restarts the process when the process dependent on at least the parameter to be updated is restartable.

10. The electronic apparatus as claimed in any of claims 1 to 9, **characterized in that** the parameter update request is based on an input with respect to a Web page that is displayed on an apparatus which is coupled to the electronic apparatus via the network.

11. The electronic apparatus as claimed in any of claims 1 to 10, further **characterized by**:
a plurality of applications to carry out processes peculiar to composite services of a printer, a copying machine or a facsimile machine.

12. An electronic apparatus for updating a value of a parameter in response to an update request received via a network, **characterized by**:
judging means (142) for judging whether or not a rebooting of the electronic apparatus is necessary depending on the parameter which is requested to be updated by the update request; and
rebooting means (1421) for rebooting the electronic apparatus when said judging means judges that the rebooting of the electronic apparatus is necessary.

13. The electronic apparatus as claimed in claim 12, further **characterized by**:
parameter management means (144) for managing a corresponding relationship of each parameter and a process to be carried out when the parameter is updated, and
said judging means judges whether or not the electronic apparatus is to be rebooted when the parameter is updated in response to the update request, based on the corresponding relationship.

14. The electronic apparatus as claimed in claim 13, **characterized in that** said judging means judges that the rebooting of the electronic apparatus is necessary when the update request requests updating of a parameter which is validated when the electronic apparatus is rebooted.

15. A parameter updating method for an electronic apparatus, **characterized by**:
a parameter updating procedure (23) updating a value of a parameter depending on a parameter update request received via a network; and
a first rebooting procedure (S37, S38) rebooting the electronic apparatus based on an updated value of the parameter after sending a response with respect to the parameter update request.

16. The parameter updating method as claimed in claim 15, further **characterized by**:
a judging procedure (S14) judging a process that is to be carried out depending on the parameter requested to be updated by the parameter update request; and
said first rebooting procedure reboots the electronic apparatus when said parameter updating procedure judges that a rebooting of the electronic apparatus is necessary.

17. The parameter updating method as claimed in claim 16, **characterized in that** said judging procedure judges whether or not the electronic apparatus is to be rebooted when the parameter is updated in response to the parameter update request, based on a predefined corresponding relationship of each parameter and a process to be carried out when the parameter is updated.

18. The parameter updating method as claimed in any of claims 15 to 17, further **characterized by**:
a reboot confirming procedure (S32-S36) confirming whether or not rebooting of the electronic apparatus is possible with respect to processes at least affected by the rebooting of the electronic apparatus, of processes started in the electronic apparatus; and
said first rebooting procedure reboots the electronic apparatus if said reboot conforming procedure confirms that rebooting of the electronic apparatus is possible with respect to all of the processes at least affected by the rebooting of the electronic apparatus.

19. The parameter updating method as claimed in any of claims 15 to 18, **characterized in that** said parameter updating procedure updates the value of the parameter, by prohibiting updating of the parameter with respect to processes dependent on at least the parameter to be updated in response to the parameter update request, of processes started in the electronic apparatus.

20. The parameter updating method as claimed in claim 19, further **characterized by**:
an update prohibiting confirming procedure (S15-S20) confirming whether or not updating of the parameter is prohibited with respect to processes dependent on at least the parameter to be updated in response to the parameter update request, of processes started in the electronic apparatus; and
said parameter updating procedure updates the value of the parameter when the updating of the parameter with respect to all of the processes dependent on at least the parameter to be updated is prohibitable.

21. The parameter updating method as claimed in any of claims 16 to 20, further **characterized by**:
a second rebooting procedure (S60) restarting a process which is dependent on the parameter which is to be updated in response to the parameter update request, of processes started in the electronic apparatus, when said judging procedure judges that restarting of said process is necessary.

22. The parameter updating method as claimed in claim 21, further **characterized by**:
a process restart judging procedure (S55-S59) judging whether or not a process that is dependent on at least the parameter to be updated in response to the parameter update request, of processes started in the electronic apparatus, is restartable; and
said second rebooting procedure restarts the process when the process dependent on at least the parameter to be updated is restartable.

23. The parameter updating method as claimed in any of claims 15 to 22, **characterized in that** the parameter update request is based on an input with respect to a Web page that is displayed on an apparatus which is coupled to the electronic apparatus via the network.

24. The parameter updating method as claimed in any of claims 15 to 23, **characterized in that** the electronic apparatus includes a plurality of applications to carry out processes peculiar to composite services of a printer, a copying machine or a facsimile machine.

25. A parameter updating method for updating a value of a parameter in response to an update request received by an electronic apparatus via a network, **characterized by**:
a judging procedure (S14) judging whether or not a rebooting of the electronic apparatus is necessary depending on the parameter which is requested to be updated by the update request; and
a rebooting procedure (S37, S38) rebooting the electronic apparatus when said judging procedure judges that the rebooting of the electronic apparatus is necessary.

26. The parameter updating method as claimed in claim 25, **characterized in that** said judging procedure judges whether or not the electronic apparatus is to be rebooted when the parameter is updated in response to the parameter update request, based on a predefined corresponding relationship of each parameter and a process to be carried out when the parameter is updated.
